# EUROPÄISCHE PATENTANMELDUNG

(11) **EP 3 787 137 A1**
(43) Veröffentlichungstag der Anmeldung: **03.03.2021**
(21) Anmeldenummer: 19194465.1
(22) Anmeldetag: 29.08.2019
(51) Int. Cl.: H02G 3/06, F16B 37/04

(54) **VERBINDUNGSVORRICHTUNG, VERBINDUNGSGARNITUR UND KABELBAHN**

(71) Anmelder: Zurecon AG, 9053 Teufen AR (CH)
(72) Erfinder: PFLUGER, Gerd, 4625 Oberbuchsiten (CH)
(74) Vertreter: Rutz & Partner

(57) **Zusammenfassung**

Die Verbindungsvorrichtung (2), die zum Verbinden von zwei Elementen (5, 6; 1A, 1B) einer Kabelbahn (1), wie einem Ausleger (5) und einer Deckenstütze (6) oder einem ersten und einem zweiten zueinander benachbarten Kabelbahnabschnitt (1A, 1B) vorgesehen ist, umfasst wenigstens eine Verbindungsgarnitur (4) mit wenigstens einer Verbindungsschraube (41) und wenigstens einer dazu korrespondierenden Schraubenmutter (42). Erfindungsgemäss ist vorgesehen, dass wenigstens eines der Kabelbahnelemente (5, 6; 1A, 1B) eine längsgestreckte Durchtrittsöffnung (30; 110; 520; 60) aufweist, dass die Verbindungsschraube (41) einen zur Verbindung mit der Schraubenmutter (42) dienenden Schraubenschaft (412) und einen damit verbundenen längsgestreckten Ankerkopf (411) aufweist, der durch die längsgestreckte Durchtrittsöffnung (30; 110; 520; 60) hindurchführbar und durch eine Drehung dort verankerbar und durch Festziehen der Schraubenmutter (42) fixierbar ist.

## Beschreibung

Die Erfindung betrifft eine Vorrichtung zum Verbinden von Kabelbahnelementen, insbesondere zum Verbinden von Kabelbahnabschnitten, eine Verbindungsgarnitur für eine solche Verbindungsvorrichtung und eine Kabelbahn mit Kabelbahnabschnitten, die durch solche Verbindungsvorrichtungen miteinander verbunden sind.

In Gewerbe-, Industrie- und Verwaltungsgebäuden sowie in Tunnelbauten werden Kabel, insbesondere Kabel für Stark- und Schwachstromnetze, Leitungen und Rohre, infolge fehlender Eigenstabilität oft in metallene Kabelbahnen, wie Kabelkanäle oder Kabelpritschen, eingelegt und so z.B. von einem Schaltfeld oder einer Zentrale zu den Verbrauchern geführt. Kabelbahnen dieser Art, die aus einzelnen Kabelbahnabschnitten zusammengesetzt werden, sind z.B. aus dem Produktkatalog der LANZ OENSINGEN AG, Juli 2017, bekannt. Zur Montage und zur Verbindung der Kabelbahnabschnitte sind Vorrichtungen verwendbar, die ebenfalls in diesem Produktekatalog beschrieben sind.

Aus EP1049226A2, ist eine Verbindungsvorrichtung bekannt, mittels der stirnseitig aneinander anstossende und mit Wandöffnungen versehene Seitenwände benachbarter Kabelbahnabschnitte miteinander verbindbar sind. Die Verbindungsvorrichtung umfasst Verbindungsplatten, die an der Unterseite mit Haken versehen sind. Zur Installation der Verbindungsplatten an den Aussenseiten der Seitenwände werden die Haken von oben in die Wandöffnungen eingeführt und nach unten gegen den Boden des Kabelkanals geschoben. In der Folge werden die Verbindungsplatten anhand eines Sicherungsmittels fixiert, das drehbar oder verschiebbar mit der Verbindungsplatte verbunden ist und in den Abschlussrand der Seitenwand eingehängt wird. Mit dem Sicherungsmittel werden somit Gelenk-, Scharnier- oder Schieberfunktionen realisiert, weshalb feingliederige Vorrichtungsteile erforderlich sind, die erheblichen Belastungen standhalten müssen. Da für die Arretierung der Verbindungsvorrichtung ein Zusammenwirken mit dem Abschlussrand der Seitenwand erforderlich ist, ist diese Verbindungsvorrichtung nicht universell einsetzbar.

Zu beachten ist ferner, dass Krafteinwirkungen auf die Kabelbahn, insbesondere Schwingungen in vertikaler Richtung, zumindest teilweise durch die Sicherungsmittel aufgefangen werden müssen, um zu verhindern, dass die Verbindungsplatten in vertikaler Richtung nach oben geschoben werden und die Haken sich aus den Wandöffnungen lösen. Auf die Sicherungsmittel können daher grössere Kräfte einwirken, weshalb diese robust auszugestalten sind, damit keine Fehlfunktionen auftreten. Diese Verbindungsvorrichtung ist daher relativ aufwendig ausgestaltet und mit entsprechendem Aufwand zu bedienen.

Der Abstand der Wandöffnungen der einander zugewandten Endstücke der Kabelbahnen entspricht zudem oft nicht dem durchgehenden Rasterabstand der Wandöffnungen der Kabelbahnen. Damit die Haken der Verbindungsplatten in diesem Fall in die Wandöffnungen eingehängt werden können, müssen die Endstücke der einander zugewandten Kabelbahnen entsprechend beabstandet werden, weshalb eine unerwünschte Lücke resultiert.

Zudem müssen Arbeiten an Kabelbahnen regelmässig »über Kopf« ausgeführt werden. Der Installateur steht oft auf einer Leiter und ist in seiner Beweglichkeit und in seinem Blickfeld beschränkt. Insbesondere ist der Blick in die Kabelbahninnenseite normalerweise verwehrt, sodass ein Zugriff auf dort vorgesehene Vorrichtungsteile kaum möglich ist. Komplizierte Verbindungsvorrichtungen sind daher oft nicht einfach installierbar.

Die DE19841643A1 offenbart eine Verbindungsvorrichtung für eine Kabelbahn, die aus einem im Querschnitt etwa U-förmigen Blechteil besteht, dessen erstes Ende gering verkröpfte Seiten- und Bodenwandungen aufweist, so dass ein weiteres Blechteil mit seinem unverkröpften zweiten Ende in das verkröpfte erste Ende des ersten Blechteils einsetzbar und in dieser Soll-Lage fixierbar ist. An den Seitenwandungen des einen Endes sind Rast- und Riegelausnehmungen ausgebildet, und an den Seitenwandungen des anderen Endes sind dazu passende Rasten und Riegel ausgebildet, so dass die beiden Kabelbahnabschnitte quer zu ihrem Längsverlauf ineinander drückbar und miteinander verbindbar sind. Die Kabelbahnabschnitte dieser Kabelbahn sind daher asymmetrisch als Steckverbinder ausgestaltet. Die Verbindungsvorrichtung ist somit in die Kabelbahn integriert, weshalb die Kabelbahn Teil der Verbindungsvorrichtung und hinsichtlich der Ausgestaltung entsprechend definiert ist. Dadurch resultieren unerwünschte Einschränkungen der Gestaltungsmöglichkeiten der Kabelbahn. Zudem resultiert ein erhöhter Fertigungsaufwand für die Kabelbahnabschnitte mit den darin integrierten Teilen der Verbindungsvorrichtung. Ein oft wünschbares Zuschneiden der Kabelbahnabschnitte vor Ort ist nicht möglich, weshalb ein idealer Verlauf der Kabelbahn gegebenenfalls nicht realisiert werden kann.

Zu beachten ist, dass Verbindungsvorrichtungen oft auch in den Kabelbahnquerschnitt hineinragen, wodurch der nutzbare Kabelbahnquerschnitt reduziert wird. Weiterhin besteht die Gefahr, dass Teile der Verbindungsvorrichtungen als Hindernisse beim Einlegen der Kabel auftreten und gegebenenfalls Verletzungen derselben verursachen können.

Die beschriebenen Probleme ergeben sich in der Regel auch bei der Montage des Trägermaterials, insbesondere bei der Verbindung von Auslegern mit Deckenstützen.

Der vorliegenden Erfindung liegt daher die Aufgabe zugrunde, eine verbesserte Verbindungsvorrichtung zum Verbinden von Kabelbahnelementen, insbesondere zum Verbinden von Kabelbahnabschnitten sowie Auslegern und Deckenstützen zu schaffen. Ferner ist eine in eine verbesserte Kabelbahn mit Kabelbahnabschnitten zu schaffen, die mit solchen Verbindungsvorrichtungen miteinander verbunden sind. Weiterhin sind einfache und kostengünstige Verbindungsgarnituren für die Verbindungsvorrichtung bereitzustellen, die mit geringem Aufwand auch dann montierbar sind, wenn der Installateur z.B. auf einer Leiter stehend in seiner Beweglichkeit und in seinem Sichtfeld beschränkt ist.

Die Verbindungsvorrichtung soll einfach ausgestaltet und mit minimalem Aufwand herstellbar und montierbar sein.

Die Verbindungsvorrichtung soll es erlauben, eine stabile Verbindung zwischen zwei Kabelbahnabschnitten sowie zwischen einem Ausleger und einer Deckenstütze zu erstellen, die auch grösseren Krafteinwirkungen standhält.

Die Verbindungsvorrichtung soll keine Änderungen an den Kabelbahnabschnitten erfordern, so dass beliebige und gegebenenfalls am Installationsort in der Länge zugeschnittene Kabelbahnabschnitte miteinander verbindbar sind, deren Lochreihen nicht ein einheitliches Lochraster bilden.

Diese Aufgabe wird mit einer Verbindungsvorrichtung, einer Kabelbahn und einer Verbindungsgarnitur für die Verbindungsvorrichtung gelöst, welche die in Anspruch 1, 11 bzw. 15 angegebenen Merkmale aufweisen. Vorteilhafte Ausgestaltungen der Erfindung sind in weiteren Ansprüchen angegeben.

Die Verbindungsvorrichtung, die zum Verbinden von zwei Elementen einer Kabelbahn, wie einem Ausleger und einer Deckenstütze oder einem ersten und einem zweiten zueinander benachbarten Kabelbahnabschnitt vorgesehen ist, umfasst wenigstens eine Verbindungsgarnitur mit wenigstens einer Verbindungsschraube und wenigstens einer dazu korrespondierenden Schraubenmutter.

Erfindungsgemäss ist vorgesehen, dass wenigstens eines der Kabelbahnelemente eine längsgestreckte Durchtrittsöffnung aufweist, dass die Verbindungsschraube einen zur Verbindung mit der Schraubenmutter dienenden Schraubenschaft und einen damit verbundenen längsgestreckten Ankerkopf aufweist, der durch die längsgestreckte Durchtrittsöffnung hindurchführbar und durch eine Drehung dort verankerbar und durch Festziehen der Schraubenmutter fixierbar ist.

Besonders vorteilhaft ist die Verbindungsvorrichtung zur Verbindung von Kabelbahnabschnitten verwendbar, die je wenigstens ein Bodenelement und beidseits daran anschliessende Seitenwände mit längsgestreckten Wandöffnungen aufweisen, und die nach deren Verbindung eine Kabelbahn bilden. Dazu umfasst die Verbindungsvorrichtung eine Verbindungsplatte, welche durch Verbindungsmittel einerseits mit einer Seitenwand des ersten Kabelbahnabschnitts und andererseits mit einer dazu benachbarten Seitenwand des zweiten Kabelbahnabschnitts verbindbar ist.

Die Verbindungsplatte weist auf einer Seite oder auf beiden Seiten eine vorzugsweise längsgestreckte Durchtrittsöffnung auf, die der Aufnahme der Verbindungsgarnitur , insbesondere zum Halten der Verbindungsschraube dient, die mit dem Ankerkopf durch die längsgestreckte Durchtrittsöffnung und eine der längsgestreckten Wandöffnungen in einer der Seitenwände hindurchführbar und durch eine Drehung in eine Ankerposition dort verankerbar und durch Festziehen der Schraubenmutter fixierbar ist.

Die Verbindungsvorrichtung ist einfach aufgebaut und lässt sich an den Elementen der Kabelbahn vorteilhaft montieren und auch wieder demontieren. Ein Eingreifen in die Kabelbahn bzw. in die Kabelbahnabschnitte ist nicht notwendig. Die Verbindungsgarnitur kann durch die Durchtrittsöffnung in der Verbindungsplatte und eine der Wandöffnungen in der Seitenwand eines Kabelbahnabschnitts hindurch geführt und durch Drehung der Schraube um 90° sowie durch Anziehen der Schraubenmutter arretiert werden. Die gesamte Manipulation kann an der Aussenseite der Kabelbahn vorgenommen werden, sodass Arbeiten bequem auch »über Kopf« ausgeführt werden können.

Die Verbindungsvorrichtung auch dann problemlos montiert werden, wenn die Lochreihen der Kabelbahnabschnitte keine einheitliche Lochreihe bilden.

In einer ersten prinzipiellen Ausgestaltung weist die Verbindungsplatte auf beiden Seiten vorzugsweise längsgestreckte Durchtrittsöffnungen auf, in denen je eine Verbindungsgarnitur gehalten ist. In dieser Ausgestaltung wird jede Seite der Verbindungsplatte mit dem zugewandten Kabelbahnabschnitt verschraubt.

Falls die Verbindungsschrauben seitlich verschiebbar sein sollen, um zu gewährleisten dass die Ankerköpfe in die Wandöffnungen einführbar sind, so sind die Durchtrittsöffnungen in den Verbindungsplatten längst gestreckt ausgebildet und zumindest annähernd parallel zu den längsgestreckten Wandöffnungen ausgerichtet. In diesem Fall kann der entsprechend gedrehte Ankerkopf an passender Stelle durch die Durchtrittsöffnung und anschliessend durch die Wandöffnung hindurch geführt und in der Folge passend gedreht werden.

In einer zweiten prinzipiellen Ausgestaltung ist die Verbindungsplatte auf einer Seite mit einer längsgestreckten Durchtrittsöffnung, in der eine Verbindungsgarnitur gehalten ist, und auf der anderen Seite mit einem Haken versehen, der in einer der Wandöffnungen eines der Kabelbahnabschnitte verankerbar ist. In dieser Ausgestaltung wird die Verbindungsplatte an einem Kabelbahnabschnitt eingehängt und mit dem anderen Kabelbahnabschnitt verschraubt. Es wird daher nur eine Verbindungsgarnitur benötigt. Die Verbindungsvorrichtung kann mit weiter reduziertem Materialaufwand und Arbeitsaufwand installiert werden.

Der Ankerkopf der Verbindungsschraube soll grundsätzlich die Durchführung eine der Wandöffnungen sowie die Verankerung an der betreffenden Seitenwand eines Kabelbahnabschnitts erlauben. Der Ankerkopf ist z.B. L-förmig, ankerförmig oder hammerförmig ausgestaltet. Beispielsweise werden konventionelle Schrauben mit einem genügend grossen Schraubenkopf zu erfindungsgemässen Verbindungsschrauben weitergebildet. Dazu wird der Schraubenkopf einer entsprechenden Verbindungsschraube vorzugsweise in zwei Ebenen geschnitten, die parallel zum Schraubenschaft verlaufen und diesen dazwischen spielfrei einschliessen. Z.B. werden Pilzkopfschrauben oder Rundkopfschrauben entsprechend bearbeitet. In der weiteren bevorzugten Ausgestaltungen werden die Verbindungsschrauben mit zwei parallel zueinander und vorzugsweise in gleichem Abstand zur Zentralachse der Verbindungsschraube verlaufenden Schnitten versehen, die nicht nur den Schraubenkopf, sondern auch den Schraubenschaft schneiden und einander gegenüberliegende Anteile mit dem Querschnitt eines Kreissegments vom Schraubenschaft abtrennen. Auf diese Weise können der Ankerkopf und nachstehend beschriebenen Indikatorelemente am Schraubenschaft in einem Arbeitsgang gefertigt werden.

In einer besonders bevorzugten Ausgestaltung wird der Schraubenschaft auf der vom Ankerkopf abgewandten Seite mit wenigstens einem Indikatorelement versehen, welches die Ausrichtung des Ankerkopfs anzeigt. Auf diese Weise erkennt der Installateur die Ausrichtung des innerhalb der Kabelbahn gehaltenen und somit nicht sichtbaren Ankerkopfs. Er kann den Ankerkopf daher von der Eintrittsposition präzise in eine gewünschte Ankerposition drehen, in der der Ankerkopf vorzugsweise formschlüssig gehalten ist und festgezogen werden kann.

Das Indikatorelement kann in den Schraubenschaft eingeformt oder eingearbeitet sein, wie dies z.B. oben beschrieben wurde. Beispielsweise ist der Schraubenschaft beidseitig mit Abflachungen und/oder stirnseitig mit einem Schlitz versehen.

In den Schlitz, der parallel zum Ankerkopf verläuft, kann ein Schraubendreher eingesetzt werden, um die Verbindungsschraube zu drehen und zu halten. Die Abflachungen, die parallel zum Ankerkopf verlaufen, können mittels einer Zange oder mittels eines Schraubenschlüssels erfasst werden, um die Verbindungsschraube zu drehen und zu halten. Die Ausrichtung der Zange oder des Schraubenschlüssels zeigt somit ebenfalls die Ausrichtung des Ankerkopfs an. Während der Schraubenschaft mit einem Werkzeug gehalten wird, kann die Schraubenmutter festgezogen werden, ohne dass sich der Ankerkopf verdreht.

Auf diese Weise gelingt die Montage der Verbindungsgarnitur und somit die Installation der Verbindungsvorrichtung in einfacher Weise.

Alternativ kann der Schraubenschaft auf der dem Ankerkopf abgewandten Seite mit einem vorzugsweise kappenförmigen oder topfförmigen Abschlussteil versehen sein, welches wenigstens ein Indikatorelement aufweist, das die Ausrichtung des Ankerkopfs anzeigt. Auf den Schraubenschaft kann z.B. eine Abschlusskappe aus Metall oder Kunststoff aufgesetzt werden, die ein Indikatorelement aufweist. Das Abschlussteil kann z.B. ein Innengewinde aufweisen und auf den Schraubenschaft oder ein daran anschliessendes abgestuftes Gewinde aufgeschraubt werden. Alternativ kann das passend positionierte Abschlussteil auch mit einem Klebstoff, wie Loctite, auf dem Schraubenschaft fixiert werden. Ferner kann das Abschlusssteil auch auf den mit Abflachungen versehen Schraubenschaft aufgesetzt werden.

Vorzugsweise weist das Abschlussteil ein oder zwei Flügelelemente auf, die parallel zum Ankerelement ausgerichtet sind und die manuell erfasst, gedreht und gehalten werden können, um den Ankerkopf korrekt auszurichten und die Schraubenmutter anschliessend festzuziehen.

In einer vorzugsweisen Ausgestaltung umfasst die Verbindungsgarnitur ein elastisches Element, wie ein Federelement oder ein Federring. Das elastische Element liegt vorzugsweise an der Schraubenmutter an und stösst die Verbindungsschraube nach aussen, wodurch der Ankerkopf gegen die zugeordnete Seitenwand gezogen wird und dort gehalten wird und nicht mehr weiter drehen kann.

Vorzugsweise wird zwischen dem Schraubenkopf und der Seitenwand und/oder der Verbindungsplatte eine formschlüssige Verbindung erstellt, sobald der Ankerkopf durch das elastische Element und/oder durch das Anziehen der Schraubenmutter gegen die Seitenwand gezogen wird.

In einer vorzugsweisen Ausgestaltung weist die die Verbindungsschraube anschliessend an den Ankerkopf ein Mehrkantelement auf, welches nach der Einführung in die Durchtrittsöffnung und/oder in eine der Wandöffnungen darin drehfest und vorzugsweise unverschiebbar gehalten ist. Vorzugsweise wird das Mehrkantelement durch das vorzugsweise vorgesehene elastische Element automatisch in die Wandöffnung gegebenenfalls auch in die Durchtrittsöffnung hinein gezogen. Bei der Montage wird der Ankerkopf der Verbindungsschraube vorzugsweise durch Überwindung einer Federkraft durch die Durchtrittsöffnung und die zugeordnete Wandöffnung hindurch geführt, manuell gedreht und in der Folge mit dem Mehrkantelement selbsttätig durch die Federkraft zurück in die Wandöffnung eingeführt.

In einer weiteren vorzugsweisen Ausgestaltung weist die Verbindungsplatte Einformungen auf, in die die Schraubenmutter oder daran vorgesehene Formelemente formschlüssig eingreifen können. Zusätzlich oder alternativ weisen vorzugsweise auch die Seitenwände der Kabelbahnabschnitte Formelemente auf, in die ein daran anliegender Ankerkopf formschlüssig eingreifen kann.

Durch die formschlüssige Verbindung des Ankerkopfs mit der Seitenwand und der Schraubenmutter mit der Verbindungsplatte wird sichergestellt, dass sich die Kabelbahnabschnitte nicht gegenüber der Verbindungsvorrichtung verschieben können.

Die Einformungen in der Verbindungsplatte und den Seitenwänden der Kabelbahnabschnitte können in einfacher Weise eingeprägt oder eingeformt werden. Alternativ können auch Sequenzen von ringförmigen oder rechteckförmigen Vertiefungen in die Verbindungsplatte und die Seitenwände eingearbeitet werden, in die die Schraubenmutter oder der Ankerkopf eindringen können.

Einformungen können auch in die langgestreckten Durchtrittsöffnungen und in die Wandöffnungen eingefügt werden.

Für Kabelbahnabschnitte, die einen zylindrischen oder hülsenförmigen Abschlussrand aufweisen, können Verbindungsplatten mit einem Kopplungselement vorgesehen werden, das in den Abschlussrand eingefügt wird. Auf diese Weise wird die Verbindungsplatte sicher gehalten. Zudem werden die zueinander korrespondierenden Kabelbahnabschnitte koaxial zueinander ausgerichtet gehalten.

Nachfolgend wird die Erfindung anhand von Zeichnungen näher erläutert. Dabei zeigt:
- Fig. 1a: eine erfindungsgemässe Kabelbahn 1 mit einem ersten und einem zweiten Kabelbahnabschnitt 1A, 1B, deren zueinander korrespondierende Seitenwände 11A, 11B, die Wandöffnungen 110 aufweisen, je durch eine erfindungsgemässe Verbindungsvorrichtung 2 miteinander verbunden sind, die je eine Verbindungsplatte 3 und zwei Verbindungsgarnituren 4 umfassen, die in zugeordnete Wandöffnungen 110 eingesetzt sind;
- Fig. 1b: die Verbindungsvorrichtung 2 von der Aussenseite der Kabelbahn 1;
- Fig. 1c: die Verbindungsvorrichtung 2 von der Innenseite der Kabelbahn 1;
- Fig. 2a: in Explosionsdarstellung eine erfindungsgemässe Verbindungsgarnitur 4 in vorzugsweiser Zusammenstellung mit einer vorzugsweise ausgestalteten Verbindungsschraube 41, einem Federring 44, einer Schraubenmutter 42 und einem Abschlussteil 43, welches mit Indikatorelementen 431 versehen ist;
- Fig. 2b: die Verbindungsgarnitur 4 von Fig. 2a ohne den Federring 44 mit vertikal ausgerichtetem Ankerkopf 411;
- Fig. 2c: die Verbindungsgarnitur 4 von Fig. 2a ohne den Federring 44 mit horizontal ausgerichtetem Ankerkopf 411;
- Fig. 2d: die Schraubenmutter 42 von Fig. 2a, die eine Anschlussplatte 422 mit frontseitig angeordneten Ringschneiden 4221 aufweist;
- Fig. 3: eine Verbindungsvorrichtung 2 gemäss Fig. 1c mit einer ersten Verbindungsgarnitur 4, die bereits eingesetzt und mit dem Ankerkopf 411 in die Ankerposition gedreht wurde, und mit einer zweiten Verbindungsgarnitur 4, mit dem Ankerkopf 411 in der Eintrittsposition, in der er durch die Durchtrittsöffnung 30 geführt, aber noch nicht verdreht wurde;
- Fig. 4: die Verbindungsvorrichtung 2 von Fig. 3 von der Aussenseite der Kabelbahn 1, während der Verbindung von zwei Kabelbahnabschnitten 1A und 1B;
- Fig. 5: die Verbindungsvorrichtung 2 von Fig. 4 von der Innenseite der Kabelbahn 1, während der Verbindung von zwei Kabelbahnabschnitten 1A und 1B;
- Fig. 6: eine erfindungsgemässe Verbindungsvorrichtung 2, die eine Verbindungsplatte 3 mit einem Haken 39, welcher in eine Wandöffnung 110 eines ersten Kabelbahnabschnitts 1A eingehängt ist, und eine Verbindungsgarnitur 4 aufweist, die in eine Wandöffnung 110 eines zweiten Kabelbahnabschnitts 1B eingesetzt wird, um die beiden Kabelbahnabschnitte 1A, 1B miteinander zu verbinden und eine Kabelbahn 1 zu bilden; und
- Fig. 7: zwei Ausleger 5, die mittels erfindungsgemässen Verbindungsvorrichtungen 2 mit einer Deckenstütze 6 verbunden werden.

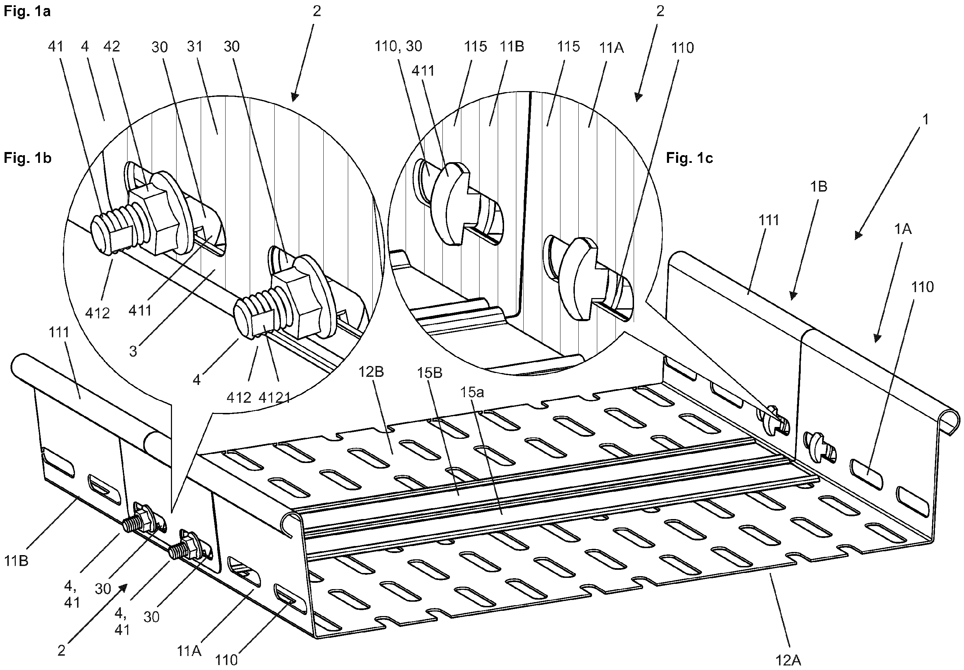

Fig. 1a zeigt eine erfindungsgemässen Kabelbahn 1 in einer bevorzugten Ausgestaltung mit einem ersten und einem zweiten Kabelbahnabschnitt 1A, 1B, die eine Bodenplatte 12A bzw. 12B und beidseits daran anschliessende Seitenwände 11A bzw. 11B aufweisen, die je mit einer Vielzahl von langgestreckten Wandöffnungen 110 und an der Oberseite mit einem gebogenen Abschlussrand 111 versehen sind. Die zumindest annähernd zylinderförmig geformten Abschlussränder 111 sind nach aussen gebogen und verlaufen zumindest annähernd kreisförmig zurück gegen die Aussenseiten der Seitenwände 11A, 11B, schliessen aber nicht vollständig daran an.

Die beiden Kabelbahnabschnitte 1A, 1B sind beidseits durch erfindungsgemässe Verbindungsvorrichtungen 2 miteinander verbunden und weisen frontseitig an den Bodenplatten 12A, 12B aneinander liegende Pufferelemente 15A, 15B auf, durch die ein kabelschonender Übergang zwischen den Kabelbahnabschnitten 1A, 1B gewährleistet wird.

Jede der gezeigten Verbindungsvorrichtungen 2 umfasst eine Verbindungsplatte 3 und zwei Verbindungsgarnituren 4, mittels denen die Verbindungsplatte 3 mit benachbarten Seitenwänden 11A, 11B der Kabelbahnabschnitte 1A, 1B verbunden ist. Obwohl der Ankerkopf 411 jeder Verbindungsschraube 41 kaum sichtbar ist, erkennt der Installateur anhand der Abflachungen 4121 die Ausrichtung des Ankerkopfs 411. Der Installateur kann die Abflachungen somit manuell oder mittels eines Werkzeugs ergreifen und den Ankerkopf 411 in die Ankerposition drehen, auch wenn er den Ankerkopf 411 nicht sieht. Die Installation kann daher bequem auch »über Kopf« ausgeführt werden.

Die Verbindungsgarnituren 4 umfassen eine Verbindungsschraube 41 (siehe Fig. 1b), die durch eine Durchtrittsöffnung 30 in der Verbindungsplatte 3 und durch eine der Wandöffnungen 110 in der zugehörigen Seitenwand 11A bzw. 11B hindurch geführt ist.

Fig. 1b zeigt die Verbindungsvorrichtung 2 von der Aussenseite der Kabelbahn 1.

Fig. 1c die Verbindungsvorrichtung 2 von der Innenseite der Kabelbahn 1.

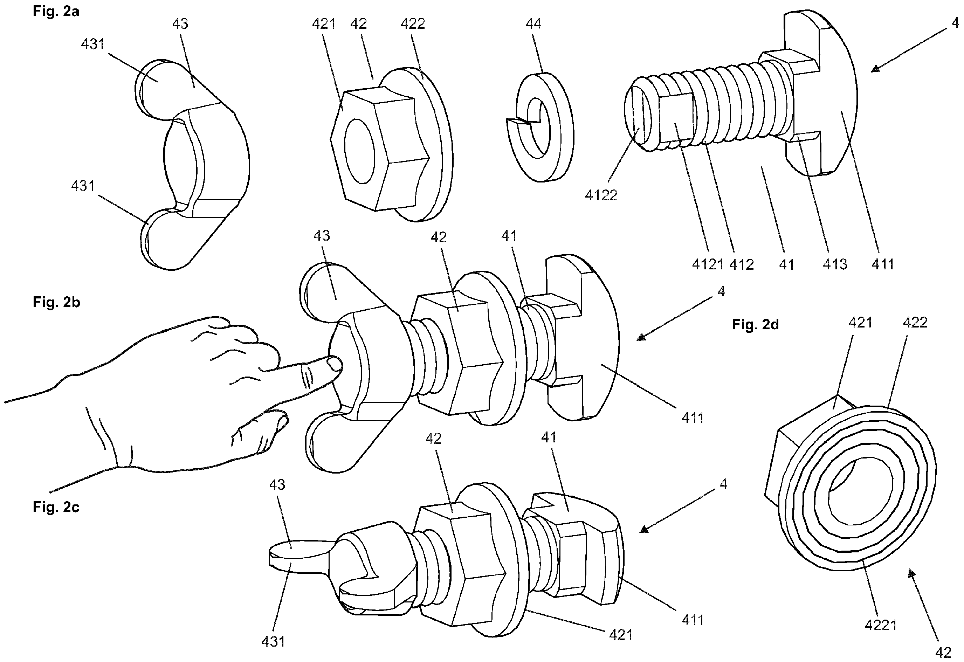

Fig. 2a zeigt eine erfindungsgemässe Verbindungsgarnitur 4 in vorzugsweiser Zusammenstellung mit einer vorzugsweise ausgestalteten Verbindungsschraube 41 und einer vorzugsweise ausgestalteten Schraubenmutter 42. Die erfindungsgemässe Schraubengarnitur 4 ist in dieser Ausgestaltung durch ein optionales elastisches Element in der Ausgestaltung eines Federrings 44 sowie durch ein optionales Abschlussteil 43 ergänzt, welches mit Indikatorelementen 431 versehen ist.

Die Verbindungsschraube 41 weist einen zur Verbindung mit der Schraubenmutter 42 dienenden Schraubenschaft 412 und einen damit verbundenen Ankerkopf 411 auf. Der Ankerkopf 411 ist ankerförmig oder hammerförmig ausgestaltet oder entspricht im Querschnitt etwa einem Kreissegment, welches durch eine Sekante von einem Kreis abgetrennt wurde.

Jeder Schraubenschaft 412 ist vorzugsweise, einseitig oder beidseitig, mit einer Abflachung 4121 versehen, die parallel zum Ankerkopf 411 ausgerichtet ist.

Die Schraubenmutter 42 weist ein mit einem Innengewinde versehenes Sechskantelement 421 und eine daran anschliessende Anschlussplatte 422 auf, die auf der vom Sechskantelement 421 abgewandten Seite vorzugsweise mit Formelementen 4221 versehen ist. Die Formelemente 4221 sind z.B. Ringschneiden, die formschlüssig in die Aussenseite der Verbindungsplatte 3 eingreifen können und dadurch formschlüssig gehalten werden.

Der Ankerkopf 411 ist derart ausgebildet, dass er durch eine längsgestreckte Durchtrittsöffnung 30 und eine der längsgestreckten Wandöffnungen 110 der Kabelbahnabschnitte 1A, 1B hindurchführbar und durch eine Drehung dort verankerbar und durch Festziehen der Schraubenmutter 42 fixierbar ist, wie dies in den Figuren 1a und 1b gezeigt ist.

Fig. 1b zeigt, dass die Schraubenmutter 42 fest gegen die Aussenseite der Verbindungsplatte 3 gezogen ist, die eine wellenförmige Oberfläche 31 aufweist, in die die Schraubenmutter 42 formschlüssig eingreifen kann. Wie erwähnt kann die Schraubenmutter 42 auch Formelemente aufweisen, die in die glatte oder verformte Aussenseite der Verbindungsplatte 3 eingreifen können.

Fig. 1c zeigt die vertikal ausgerichteten Ankerköpfe 411 der Verbindungsschrauben 41, die hinter Wandöffnungen 110 der Seitenwände 11A, 11B der beiden Kabelbahnabschnitte 1A, 1B verankert sind. Es ist gezeigt, dass die Seitenwände 11A, 11B in dieser vorzugsweisen Ausgestaltung Einformungen 115, z.B. vertikal verlaufende Wellen aufweist, in die jeder Ankerkopf 411 formschlüssig eingreifen kann. Auf diese Weise werden die Verbindungsvorrichtungen 2 nicht nur kraftschlüssig, sondern auch formschlüssig mit den Kabelbahnabschnitten 1A, 1B verbunden und sind nach der Installation unverschiebbar gehalten.

Fig. 2a zeigt exemplarisch, dass der Schraubenschaft 412 frontseitig mit Indikatorelementen 4121 und 4122, welche die Ausrichtung des Ankerkopfs 411 anzeigen, versehen ist. An einander gegenüberliegenden Seiten ist der die Frontseite des Schraubenschafts 412 mit Abflachungen 4121 versehen, die parallel zum Ankerkopf 411 ausgerichtet sind. Auch wenn der in einer Kabelbahnabschnitt 1A, 1B eingeführte Ankerkopf 411 nicht mehr sichtbar ist, erkennt der Installateur anhand der Abflachungen 4121 dessen Ausrichtung und kann ihn zur Fixierung der Verbindungsvorrichtung 2 aus einer Eintrittsposition in eine Ankerposition und zur Demontage der Verbindungsvorrichtung 2 auch wieder zurück drehen. Stirnseitig ist ein Schlitz 4122 in den Schraubenschaft 412 eingepresst oder eingeformt, der ebenfalls in derselben Richtung wie der Ankerkopf 411 ausgerichtet ist. Der Schraubenschaft 412 kann daher mit einem Werkzeug, z.B. einem Schraubendreher oder einem Schraubenschlüssel, erfasst und gehalten werden, um die Verbindungsschraube 41 in die Ankerposition zu drehen und anschliessend die Schraubenmutter 42 festzuziehen.

Alternativ kann auf den Schraubenschaft 412 ein kappenförmiges oder topfförmiges Abschlussteil 43, das z.B. aus Metall oder Plastik gefertigt ist, aufgesetzt werden. Das in Fig. 2a gezeigte Abschlussteil 43 weist zwei einander gegenüberliegende flügelförmige Indikatorelemente 431 auf, welche die Ausrichtung des Ankerkopfs 411 anzeigen. Das Abschlussteil 43 kann ein Innengewinde aufweisen, mit dem es auf den Schraubenschaft 412 aufgeschraubt wird. Alternativ kann die Innenseite des Abschlussteils 43 an die Abflachungen 4121 angepasst sein, sodass das Abschlussteil 43 formschlüssig auf die Frontseite des Schraubenschafts 412 aufgesetzt werden kann und in der Folge stets parallel zum Ankerkopf 411 ausgerichtet ist. Das Abschlussteil 43 kann am Schraubenschaft 412 auch festgeklebt werden. In der Folge, insbesondere bei einer formschlüssigen Verbindung, kann die Verbindungsschraube 41 am Verbindungsteil 43 erfasst und wahlweise vor und zurück gedreht werden, um den Ankerkopf 411 aus der Eintrittsposition in die Ankerposition oder zurück zu drehen.

In dieser bevorzugten Ausgestaltung weist die Verbindungsschraube 41 anschliessend an den Ankerkopf 411 ein Mehrkantelement 413 auf, welches nach der Einführung in die Durchtrittsöffnung 30 und/oder in eine der Wandöffnungen 110 darin drehfest und vorzugsweise unverschiebbar gehalten ist. Das Mehrkantelement 413 ist vorzugsweise quadratisch oder sechskantig ausgebildet, sodass es in einer mit einer entsprechenden Ausformung 301 versehene Durchtrittsöffnung 30 und/oder in einer ebensolchen Ausformung in einer der Wandöffnungen 110 formschlüssig und unverschiebbar fixierbar ist.

Die Verbindungsgarnitur 4 von Fig. 2a umfasst zusätzlich ein elastisches Element 44 in der exemplarischen Ausgestaltung eines Federrings, welches die Montage der Verbindungsgarnitur 4 erleichtert und die erstellte Verbindung sichert. Vorzugsweise ist ein Federelement mit wenigstens zwei Windungen vorgesehen, mittels dessen der durch eine Wandöffnung 110 hindurchgeführte und in die Ankerposition gedrehte Ankerkopf 411 mit dem Mehrkantelement 413 zurück gegen die Wandöffnung 110 gezogen wird. Das Mehrkantelement 413 tritt daher automatisch in die Wandöffnung 110 ein und wird dort drehsicher und vorzugsweise formschlüssig und unverschiebbar gehalten.

Fig. 2b zeigt die Verbindungsgarnitur 4 von Fig. 2a ohne den Federring 44 mit vertikal ausgerichtetem Ankerkopf 411 in der Ankerposition, die bei fehlender Sicht auf den Ankerkopf 411 durch Betrachtung der Ausrichtung des Abschlussteils 43 erkennbar ist.

Fig. 2c zeigt die Verbindungsgarnitur 4 von Fig. 2a ohne den Federring 44 mit horizontal ausgerichtetem Ankerkopf 411 und horizontal ausgerichtetem Abschlussteil 43.

Fig. 2d zeigt die Schraubenmutter 42 von Fig. 2a, die eine Anschlussplatte 422 mit frontseitig angeordneten Ringschneiden 4221 aufweist, die in die Aussenseite der Verbindungsplatte 3 einschneiden können.

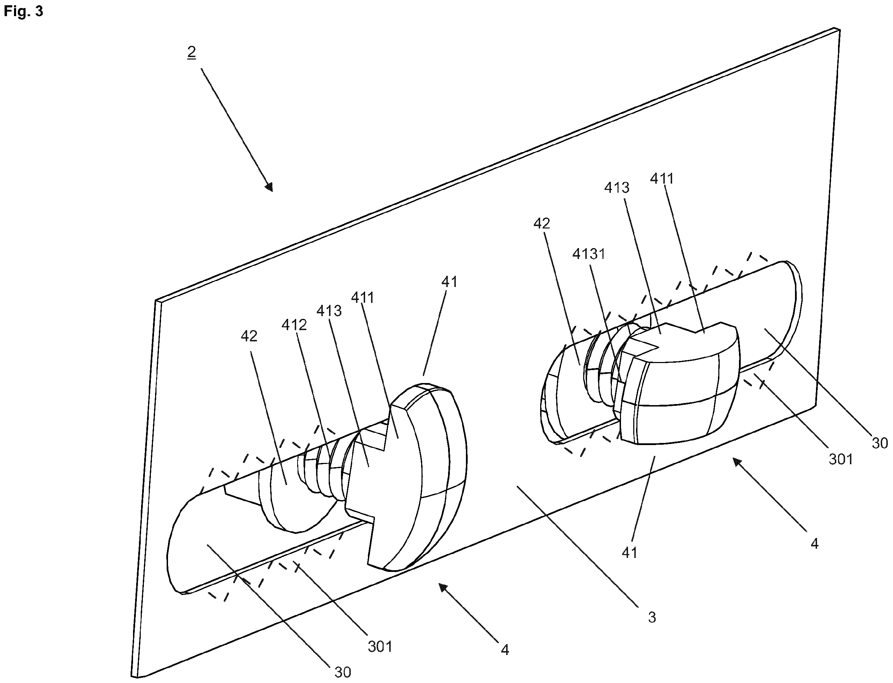

Fig. 3 zeigt eine Verbindungsvorrichtung 2 gemäss Fig. 1c mit einer ersten Verbindungsgarnitur 4, die bereits eingesetzt und mit dem Ankerkopf 411 in die Ankerposition gedreht wurde, und mit einer zweiten Verbindungsgarnitur 4 mit dem Ankerkopf 411 in der Eintrittsposition, in der er durch die Durchtrittsöffnung 30 geführt, aber noch nicht gedreht wurde.

Schematisch ist gezeigt, dass die Durchtrittsöffnungen 30 vorzugsweise Einformungen, wie Sägezahnstrukturen aufweisen, in die die vorzugsweise vorgesehenen Mehrkantelemente 413 der Verbindungsschrauben 41 eintreten können. Die Verbindungsschrauben 41 werden daher mit dem Ankerkopf 411 und dem Mehrkantelement 413 durch die Durchtrittsöffnung 30 und die zugehörige Wandöffnung 110 geführt und in die Ankerposition gedreht, wonach das Mehrkantelement 413, welches vorzugsweise ein an die Sägezahnstrukturen angepasstes Formelement 4131 aufweist, zurück in die Wandöffnung 110 und in die Durchtrittsöffnung 30 gezogen und dort formschlüssig gehalten wird. Auch auf diese Weise kann zwischen der Verbindungsvorrichtung 2 und den Kabelbahnabschnitten 1A, 1B eine formschlüssige Verbindung erstellt werden.

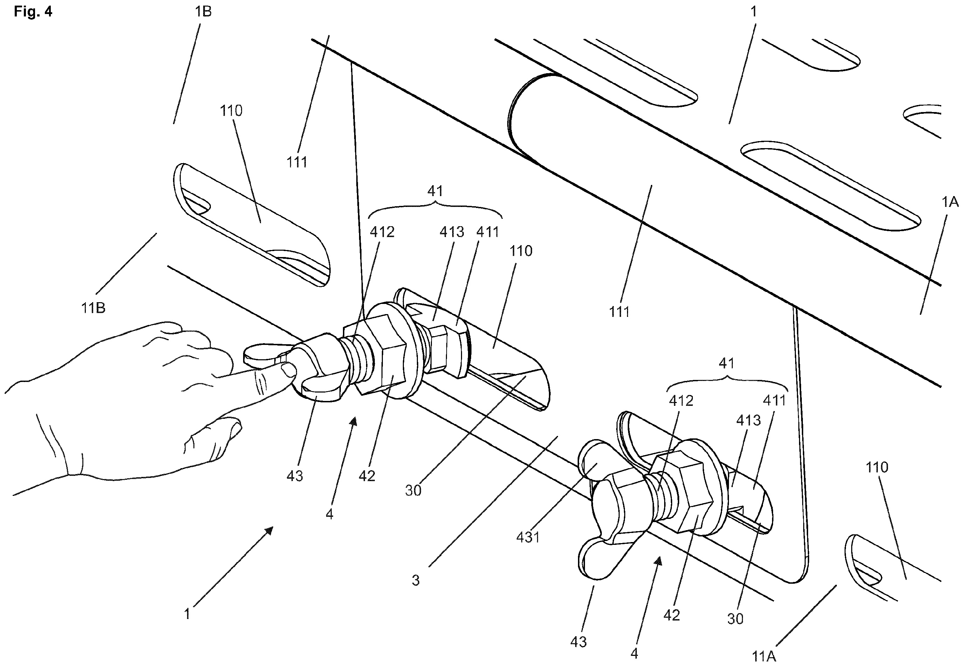

Fig. 4 zeigt die Verbindungsvorrichtung 2 von Fig. 3 von der Aussenseite der Kabelbahn 1, während der Verbindung von zwei Kabelbahnabschnitten 1A und 1B. Die Verbindungsplatte 3 ist bereits durch eine erste Verbindungsgarnitur 4, die in die Ankerposition gedreht wurde, mit dem ersten Kabelbahnabschnitt 1A verbunden. Der Ankerkopf 411 der zweiten Verbindungsgarnitur 4 wird soeben durch die zweite Durchtrittsöffnung 30 der Verbindungsplatte 3 und die zugehörige Wandöffnung 110 gestossen, wonach er ebenfalls in die Ankerposition gedreht werden kann.

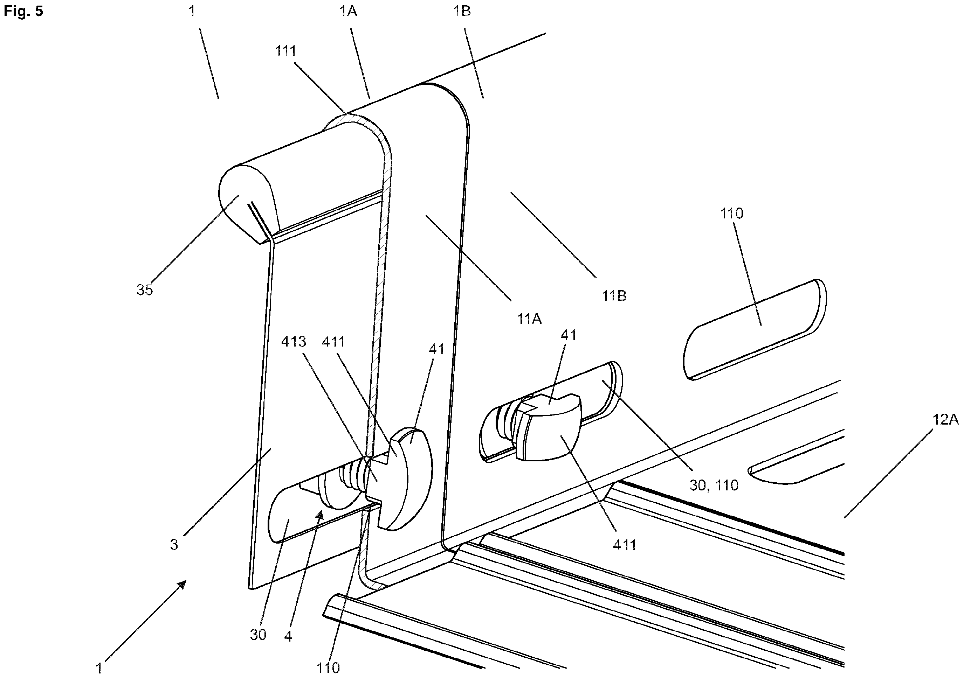

Fig. 5 zeigt die Verbindungsvorrichtung 2 von Fig. 4 von der Innenseite der Kabelbahn 1, während der Verbindung von zwei Kabelbahnabschnitten 1A und 1B. Der Ankerkopf 411 der zweiten Verbindungsgarnitur 4 wurde soeben durch die Durchtrittsöffnung 30 und die Wandöffnung 110 hindurch gestossen und kann nun um 90° in die Ankerposition gedreht werden. Es ist gezeigt, dass das Mehrkantelement 413 der Verbindungsschraube 41 z.B. vom Federelement 44 von Fig. 2a zurück in die Wandöffnung 110 gezogen wird. Um dies zu illustrieren wurde der erste Kanalabschnitt 1A an der betreffenden Stelle geschnitten. Dadurch ist auch gezeigt, dass die Verbindungsplatte 3 in dieser vorzugsweisen Ausgestaltung ein nahezu zylinderförmiges Kopfelement 35 aufweist, welches in den hülsenförmige Abschlussrand 111 der Seitenwände 11A, 11B eingeführt wurde, um die Kabelbahnabschnitte 1A, 1B zusätzlich miteinander zu verbinden.

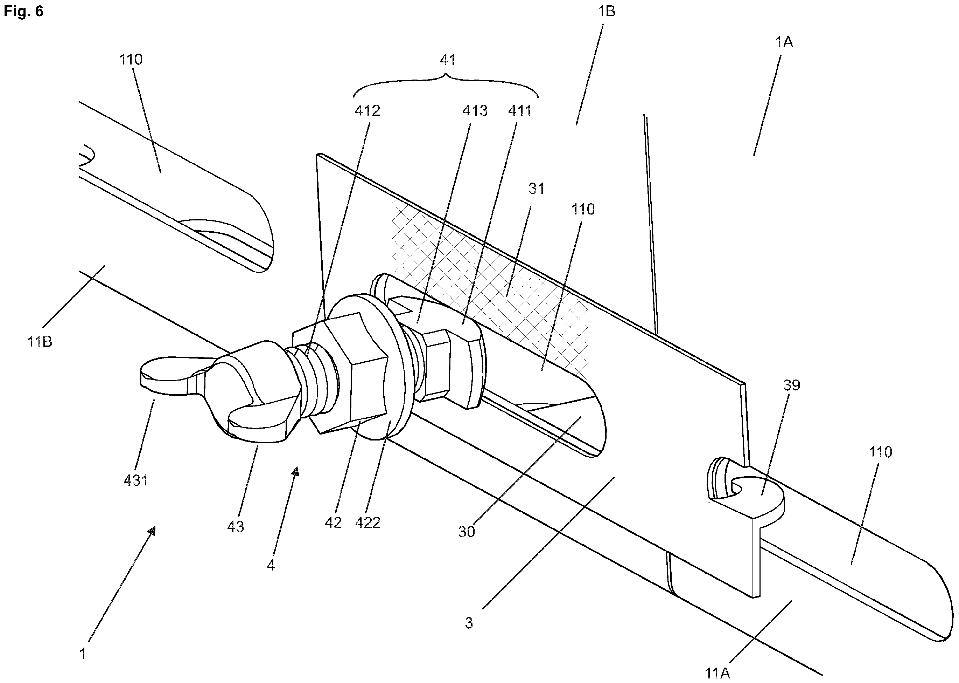

Fig. 6 zeigt eine erfindungsgemässe Verbindungsvorrichtung 2, die eine Verbindungsplatte 3 mit einem Haken 39, welcher in eine Wandöffnung 110 eines ersten Kabelbahnabschnitts 1A eingehängt ist, und eine Verbindungsgarnitur 4 aufweist, die in eine Wandöffnung 110 eines zweiten Kabelbahnabschnitts 1B eingesetzt wird, um die beiden Kabelbahnabschnitte 1A, 1B miteinander zu verbinden und eine Kabelbahn 1 zu bilden. Der Haken 39 wurde aus der Verbindungsplatte 3 ausgeschnitten und um 90° nach hinten gebogen. Die Verbindungsgarnitur 4 wird auf dieselbe Weise installiert, wie dies zuvor beschrieben wurde. Diese Verbindungsvorrichtung 2 kann noch kostengünstiger gefertigt und noch einfacher installiert werden.

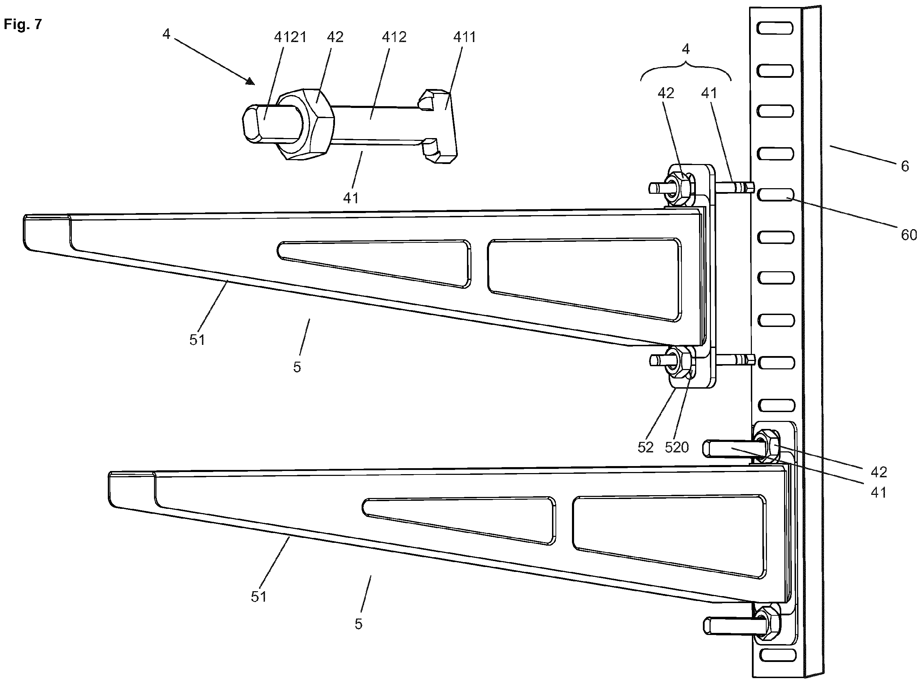

Fig. 7 zeigt zwei Ausleger 5, die mittels erfindungsgemässen Verbindungsvorrichtungen 2 mit einer Deckenstütze 6 verbunden werden. Der Ausleger 5, auf den eine Kabelbahn 1 z.B. gemäss Fig. 1 abgelegt werden kann, umfasst ein nach unten geöffnetes U-Profil-förmiges Tragprofil 51, das mit einer Tragplatte 52 verbunden ist. Die Tragplatte 52 überragt das Tragprofil 51 nach unten und nach oben und weist an beiden Enden vorzugsweise längsgestreckte Durchtrittsöffnungen 520 auf, die der Aufnahme einer erfindungsgemässen Verbindungsschraube 41 dienen. Sofern eine längsgestreckte Durchtrittsöffnung 520 vorgesehen ist, so kann der Ankerkopf 411 der Verbindungsschraube 41 durch diese hindurch geführt werden. Auf diese Weise kann eine Verbindungsgarnitur 4, wie sie in Fig. 7 exemplarisch gezeigt ist, mit einem Handgriff mit dem Ausleger 5 verbunden werden. Ausleger 5 werden daher bevorzugt mit vormontierten Schraubengarnituren 4 ausgeliefert, sodass sie mit wenigen Handgriffen an einer Deckenstütze 6 montiert werden können, wie sie in Fig. 7 ebenfalls exemplarisch gezeigt ist. Die Deckenstütze 6, die vorzugsweise eine nicht dargestellte Kopfplatte aufweist, wird zum Beispiel an einer Gebäudedecke montiert. Zur Verbindung mit Schraubengarnituren 4 weist die Deckenstütze eine Reihe von längsgestreckten Durchtrittsöffnungen 60 auf, in die die Verbindungsschrauben 41 mit dem Ankerkopf 411 in der oben beschriebenen Weise verankert und fest gezogen werden können.

Wie in der vergrösserten Darstellung gut sichtbar ist, ist die Verbindungsschraube 41 in dieser vorzugsweisen Ausgestaltung mit zwei parallel zueinander ausgerichteten Indikatorelementen 4121 versehen. Die Indikatorelemente 4121 wurden durch zwei parallel verlaufende Längsschnitte durch den Schraubenschaft 412 und den Ankerkopf 411 in einfacher Weise geschaffen. Ein Teil des Schraubengewindes wurde weggeschnitten. Das verbleibende Gewinde weist hingegen eine genügende Festigkeit auf, um die Schraubenmutter 42 formschlüssig zu halten. Auf diese Weise wurde eine für die Verbindungsgarnitur 4 geeignete Verbindungsschraube 41 in besonders einfacher Weise geschaffen. Der innerhalb der Deckenstütze 6 gehaltene Ankerkopf 411 kann durch Drehen der Indikatorelemente 4121 vertikal ausgerichtet werden. Der Schraubenschaft 412 wird beispielsweise mittels eines Werkzeugs in der gewählten Ausrichtung gehalten, wonach die Schraubenmutter 42 festgezogen wird.

## Patentansprüche

1. Verbindungsvorrichtung (2) zum Verbinden von zwei Elementen (5, 6; 1A, 1B) einer Kabelbahn (1), wie einem Ausleger (5) und einer Deckenstütze (6) oder einem ersten und einem zweiten zueinander benachbarten Kabelbahnabschnitt (1A, 1B), mit einer Verbindungsgarnitur (4), die wenigstens eine Verbindungsschraube (41) und wenigstens eine dazu korrespondierende Schraubenmutter (42) umfasst, **dadurch gekennzeichnet, dass** wenigstens eines der Kabelbahnelemente (5, 6; 1A, 1B) eine längsgestreckte Durchtrittsöffnung (30; 110; 520; 60) aufweist, dass die Verbindungsschraube (41) einen zur Verbindung mit der Schraubenmutter (42) dienenden Schraubenschaft (412) und einen damit verbundenen längsgestreckten Ankerkopf (411) aufweist, der durch die längsgestreckte Durchtrittsöffnung (30; 110; 520; 60) hindurchführbar und durch eine Drehung dort verankerbar und durch Festziehen der Schraubenmutter (42) fixierbar ist.

2. Verbindungsvorrichtung (2) nach Anspruch 1, **dadurch gekennzeichnet, dass** Verbindungsvorrichtung (2) zum Verbinden benachbarter erster und zweiter Kabelbahnabschnitte (1A, 1B), die je wenigstens ein Bodenelement (12A; 12B) und beidseits daran anschliessende Seitenwände (11A; 11B) mit längsgestreckten Wandöffnungen (110) umfassen, und die nach deren Verbindung eine Kabelbahn (1) bilden, eine Verbindungsplatte (3) vorgesehen ist, welche durch Verbindungsgarnituren (4) einerseits mit einer Seitenwand (11A) des ersten Kabelbahnabschnitts (1A) und andererseits mit einer dazu benachbarten Seitenwand (11B) des zweiten Kabelbahnabschnitts (1A) verbindbar ist, wobei der Ankerkopf (411) der Verbindungsschraube (41) der jeweiligen Verbindungsgarnitur (4) durch eine der längsgestreckten Wandöffnungen (110) in einer der Seitenwände (11A; 11B) hindurchführbar und durch eine Drehung dort verankerbar und durch Festziehen der Schraubenmutter (42) fixierbar ist.

3. Verbindungsvorrichtung (2) nach Anspruch 1, **dadurch gekennzeichnet, dass** die Verbindungsplatte (3) auf beiden Seiten vorzugsweise längsgestreckte Durchtrittsöffnungen (30) aufweist, in denen je eine Verbindungsgarnitur (4) gehalten ist oder dass die Verbindungsplatte (3) auf einer Seite mit einer vorzugsweise längsgestreckten Durchtrittsöffnung (30), in der eine Verbindungsgarnitur (4) gehalten ist, und auf der anderen Seite mit einem Haken (39) versehen ist, der in einer der Wandöffnungen (110) eines der Kabelbahnabschnitte (1A, 1B) verankerbar ist.

4. Verbindungsvorrichtung (2) nach Anspruch 1, 2 oder 3, **dadurch gekennzeichnet, dass** der Ankerkopf (411) L-förmig, ankerförmig oder hammerförmig ausgestaltet ist und/oder dass der Schraubenschaft (412) auf der dem Ankerkopf (411) abgewandten Seite mit wenigstens einem Indikatorelement (4121, 4122, 431) versehen ist, welches die Ausrichtung des Ankerkopfs (411) anzeigt.

5. Verbindungsvorrichtung (2) nach einem der Ansprüche 1 - 4, **dadurch gekennzeichnet, dass** das Indikatorelement (4121, 4122) in den Schraubenschaft (412) eingeformt ist oder dass der Schraubenschaft (412) auf der dem Ankerkopf (411) abgewandten Seite mit einem kappenförmigen oder topfförmigen Abschlussteil (43) aus Metall oder Plastik versehen ist, welches wenigstens ein Indikatorelement (431) aufweist, das die Ausrichtung des Ankerkopfs (411) anzeigt.

6. Verbindungsvorrichtung (2) nach Anspruch 5, **dadurch gekennzeichnet, dass** das Abschlussteil (43) mit einem Innengewinde und/oder einem oder zwei Flügelelementen (431) versehen ist, die als Indikatorelement (431) dienen.

7. Verbindungsvorrichtung (2) nach einem der Ansprüche 1 - 6, **dadurch gekennzeichnet, dass** die Verbindungsgarnitur (4) wenigstens ein elastisches Element (44) umfasst, wie ein Federelement oder einen Federring.

8. Verbindungsvorrichtung (2) nach einem der Ansprüche 1 - 7, **dadurch gekennzeichnet, dass** die Verbindungsschraube (41) anschliessend an den Ankerkopf (411) ein Mehrkantelement (413) aufweist, welches nach der Einführung in die Durchtrittsöffnung oder Wandöffnung (30; 110; 520; 60) darin drehfest und vorzugsweise unverschiebbar gehalten ist.

9. Verbindungsvorrichtung (2) nach einem der Ansprüche 1-8, **dadurch gekennzeichnet, dass** die Verbindungsplatte (3) Einformungen (31) aufweist, in die die Schraubenmutter (42) oder daran vorgesehene Formelemente (421) formschlüssig eingreifen können und/oder die Seitenwände (11A; 11B) der Kabelbahnabschnitte (1A, 1B) vorzugsweise eingeprägte Formelemente (115) aufweisen, in die der daran anliegende Ankerkopf (411) formschlüssig eingreifen kann.

10. Verbindungsvorrichtung (2) nach einem der Ansprüche 1-9, **dadurch gekennzeichnet, dass** die Verbindungsplatte (3) ein Kopplungselement (35) aufweist, welches in einen Abschlussrand (111) in den Seitenwänden (11A; 11B) eingreifen kann.

11. Kabelbahn (1) mit wenigstens zwei Kabelbahnabschnitten (1A, 1B), die wenigstens ein Bodenelement (12A; 12B) und beidseits daran anschliessende erste und zweite Seitenwände (11A; 11B) mit darin vorgesehenen Wandöffnungen (110) umfassen und die paarweise je durch wenigstens eine Verbindungsvorrichtung (2) nach einem der Ansprüche 1 - 10 miteinander verbundene sind.

12. Kabelbahn (1) nach Anspruch 11, **dadurch gekennzeichnet, dass** die Seitenwände (11A; 11B) einen vorzugsweise hülsenförmige Abschlussrand (111) aufweisen, der nach innen oder nach aussen gebogen ist und in dem ein an der Verbindungsplatte (3) vorgesehenes Kopplungselement (35) gehalten ist.

13. Kabelbahn (1) nach Anspruch 11 oder 12, **dadurch gekennzeichnet, dass** die längsgestreckten Wandöffnungen (110) in den Seitenwänden (11A; 11B) und die längsgestreckten Durchtrittsöffnungen (30) in der Verbindungsplatte (3) in dieselbe Richtung ausgerichtet sind und gleiche oder unterschiedliche Abmessungen und gleiche oder unterschiedliche Rasterabstände aufweisen.

14. Verbindungsgarnitur (4) nach einer der Ansprüche 1 - 10, umfassend eine Schraubenmutter (42) und eine Verbindungsschraube (41), die einen Ankerkopf (411), der L-förmig, ankerförmig oder hammerförmig ausgestaltet ist, und einen zur Verbindung mit der Schraubenmutter (42) dienenden Schraubenschaft (412) aufweist, auf dem, an der vom Ankerkopf (411) abgewandten Seite, ein Abschlussteil (43) versehen ist, welches wenigstens ein Indikatorelement (431) aufweist, das die Ausrichtung des Ankerkopfs (411) anzeigt.

15. Verbindungsgarnitur (4) nach Anspruch 14, **dadurch gekennzeichnet, dass** die Verbindungsschraube (41) anschliessend an den Ankerkopf (411) ein Mehrkantelement (413 aufweist, welches nach der Einführung in die Durchtrittsöffnung (30) und/oder in eine der Wandöffnungen (110) darin drehfest gehalten ist.
